# EUROPEAN PATENT APPLICATION

(11) **EP 3 825 911 A2**
(43) Date of publication of application: **26.05.2021**
(21) Application number: 21163614.7
(22) Date of filing: 19.03.2021
(51) Int. Cl.: G06K 9/32, G06K 9/62

(54) **IMAGE RECOGNIZING METHOD, APPARATUS, ELECTRONIC DEVICE AND STORAGE MEDIUM**

(30) Priority: 30.06.2020 CN 202010614298
(71) Applicant: BEIJING BAIDU NETCOM SCIENCE AND TECHNOLOGY CO. LTD., 100085 Beijing (CN)
(72) Inventor: LV, Xiangxiang, BEIJING, Haidian District 100085 (CN); SHI, En, BEIJING, Haidian District 100085 (CN); XIE, Yongkang, BEIJING, Haidian District 100085 (CN)
(74) Representative: Lavoix

(57) **Abstract**

The present application discloses an image recognition method, apparatus, an electronic device and a storage medium, and relates to the field of neural networks and depth learning. An implementation solution may be as follows: loading a first image recognition model; inputting an image to be recognized into a first image recognition model; predicting the image to be recognized by using a first image recognition model to obtain an output result of a network layer of the first image recognition model; and performing post-processing on the output result of the network layer of the first image recognition model, to obtain an image recognition result.

## Description

### TECHNICAL FIELD

The present application relates to a field of artificial intelligence, and in particular to fields of neural networks and depth learning.

### BACKGROUND

In recent years, artificial intelligence (AI) is becoming a key technology of full-scene intelligent transformation, such as intelligent community, assistant driving, face recognition, etc. Under an assistant driving scene, a vehicle is equipped with various sensors and cameras, and senses surrounding environments based on a depth learning technology, so as to help the vehicle to select a safe driving strategy, and improve the road traffic safety. Under an industrial quality inspection scene, a machine is utilized to identify defective products, a full-automatic flow is realized, so as to greatly improve efficiency and reduce labor cost.

### SUMMARY

The present application provides an image recognition method and apparatus, an electronic device and a storage medium.

According to one aspect of the present application, there is provided an image recognition method including:
loading a first image recognition model;
inputting an image to be recognized into the first image recognition model;
predicting the image to be recognized by using the first image recognition model, to obtain an output result of a network layer of the first image recognition model; and
performing post-processing on the output result of the network layer of the first image recognition model, to obtain an image recognition result.

According to another aspect of the present application, there is provided an image recognition apparatus including:
a loading module configured for loading the first image recognition model;
an input module configured for inputting the image to be recognized into the first image recognition model;
a prediction module configured for predicting the image to be recognized by using the first image recognition model, to obtain an output result of a network layer of the first image recognition model; and
a post-processing module configured for performing post-processing on the output result of the network layer of the first image recognition model, to obtain an image recognition result.

According to another aspect of the present application, there is provided an electronic device including:
at least one processor; and
a memory communicatively connected to the at least one processor; wherein,
the memory stores instructions executable by the at least one processor, the instructions being executed by the at least one processor to enable the at least one processor to perform the image recognition method of any one of the embodiments of the present application.

According to another aspect of the present application, there is provided a non-transitory computer-readable storage medium storing computer instructions, the computer instructions causing a computer to perform the image recognition method of any one of the embodiments of the present application.

It is to be understood that the description in this section is not intended to identify key or critical features of the embodiments of the present application, nor is it intended to limit the scope of the application. Other features of the present application will become readily understood from the following description.

### BRIEF DESCRIPTION OF THE DRAWINGS

The drawings are used to better understand the scheme and do not constitute a limitation to the present application, wherein:
FIG. 1 is a flowchart for implementing an image recognition method according to an embodiment of the present application;
FIG. 2 is a flowchart for implementing S104 in an image recognition method according to an embodiment of the present application;
FIG. 3 is a flowchart for implementing another image recognition method according to an embodiment of the present application;
FIG. 4 is a schematic diagram showing the image recognition effect of an embodiment of the present application;
FIG. 5 is a schematic overall flow diagram according to an embodiment of the present application;
FIG. 6 is a schematic diagram showing the structure of an image recognition apparatus according to an embodiment of the present application;
FIG. 7 is a schematic diagram showing the structure of another image recognition apparatus according to an embodiment of the present application;
FIG. 8 is a block diagram of an electronic device for implementing an image recognition method according to an embodiment of the present application.

### DETAILED DESCRIPTION

Exemplary embodiments of the present application are described below in combination with the accompanying drawings, including various details of the embodiments of the present application to facilitate the understanding, and they should be considered as merely exemplary. Thus, it should be realized by those of ordinary skill in the art that various changes and modifications can be made to the embodiments described here without departing from the scope and spirit of the present application. Also, for the sake of clarity and conciseness, the contents of well-known functions and structures are omitted in the following description.

Although AI can drive the development of various industries, traditional industries have less experience and higher cost in the development and use of depth learning technology. A neural network inference engine (NNIE) in a chip is a hardware unit in the chip specifically for accelerating a neural network, especially a deep learning convolution neural network. A calculation with an NNIE chip and a neural network acceleration engine can reach 2 Tera operations per second (TOPS). 1 TOPS represents 1 trillion calculations per second.

For example, chip developing boards are widely used in various industries, although they are equipped with an NNIE AI chip, a certain level of technology is required for utilizing AI capability thereof. Some neural network models contain a network layer which is not supported by the NNIE. For such neural network models, the NNIE chip cannot be deployed directly, or even if the NNIE chip is deployed therein, an available image recognition result cannot be obtained.

In the prior art, because a certain level of technology is required for using an NNIE chip, in a case where a user that needs to utilize NNIE capability does not learn deep learning technology, the user will not know how to use it. Or, the depth learning model is not a convolutional architecture for fast feature embedding (Caffe) supported by the NNIE chip and thus cannot be converted to a format supported by the NNIE. Or, a network layer which is not supported by the NNIE chip is included in the structure of the neural network model, so that the output result of the NNIE cannot be used as the final result of image recognition. Or, it is relatively complex to integrate an NNIE interface, with an absence of corresponding engineering capability and a high integration cost. The above cases are main reasons that cause the current NNIE chip to be incapable of being widely applied in the field of image recognition.

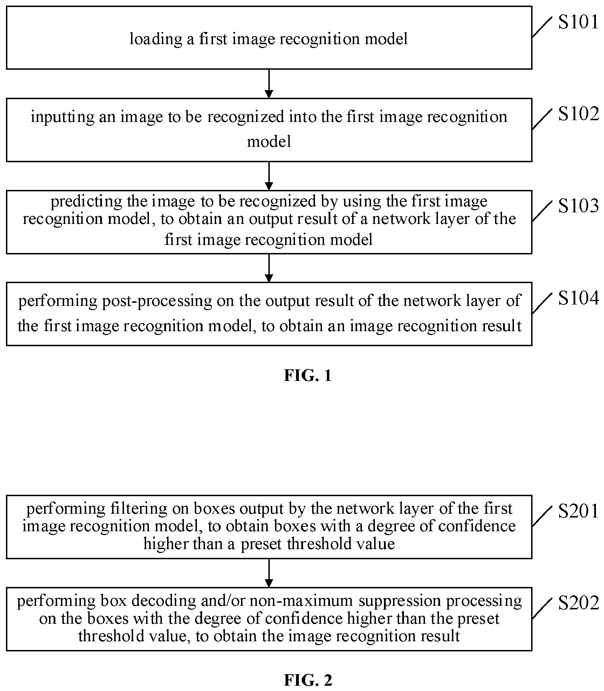

In order to solve the technical problem, an embodiment of the present application provides an image recognition method, and FIG. 1 is a flowchart for realizing the image recognition method in the embodiment of the present application.
S101: loading a first image recognition model;
S102: inputting an image to be recognized into the first image recognition model;
S103: predicting the image to be recognized by using the first image recognition model, to obtain an output result of a network layer of the first image recognition model; and
S104: performing post-processing on the output result of the network layer of the first image recognition model, to obtain an image recognition result.

According to the embodiment of the present application, the post-processing is performed on the output result of the network layer of the first image recognition model, to obtain a finally available image recognition result. In this way, even if a certain type of AI chip (for example, a Hisilicon NNIE chip) does not support the network layer of the first image recognition model, the first image recognition model can be deployed by applying this type of AI chip, so that the barriers in use of part of AI chips are eliminated and the application difficulty of the AI chips is reduced.

Optionally, embodiments of the present application may be applied to the NNIE of the first chip. Correspondingly, S101 may include: loading the first image recognition model on the NNIE of the first chip. Optionally, the first chip may be a Hisilicon NNIE chip.

The above S101 to S104 constitute a process of deploying the first image recognition model on the NNIE of the chip. Some neural networks, such as Single Shot MultiBox Detector (SSD) model, YoloV3 (You Only Live Once V3) model, may include network layers that are not supported by NNIE (e.g., PriorBox, Yolo box, etc.). For these neural networks, post-processing can be performed on the output results of the network layer of the first image recognition model by using S104 described above, to obtain a usable image recognition result. Optionally, the post-processing may be implemented by manually writing relevant codes, and executed in a CPU.

FIG. 2 is a flowchart for implementing S104 in an image recognition method according to an embodiment of the present application, which may include:
S201: performing filtering on boxes output by the network layer of the first image recognition model, to obtain the boxes with a degree of confidence higher than a preset threshold value; and
S202: performing box decoding and/or non-maximum suppression processing on the boxes with the degree of confidence higher than the preset threshold value, to obtain the image recognition result.

The post-processing time can be reduced by about 50%, through filtering the boxes in advance.

The manner shown in FIG. 2 may be applicable to the case where the first image recognition model is a YoLoV3 model and the above-described first chip is an NNIE chip. The NNIE of the chip does not support the network layer of the YoLoV3 model, and the output result of the YoLoV3 model contains boxes.

In some implementations, the loading, the inputting, and the predicting may be carried out directly by using the NNIE application programming interface (API) of the first chip, to simplify the model deployment process.

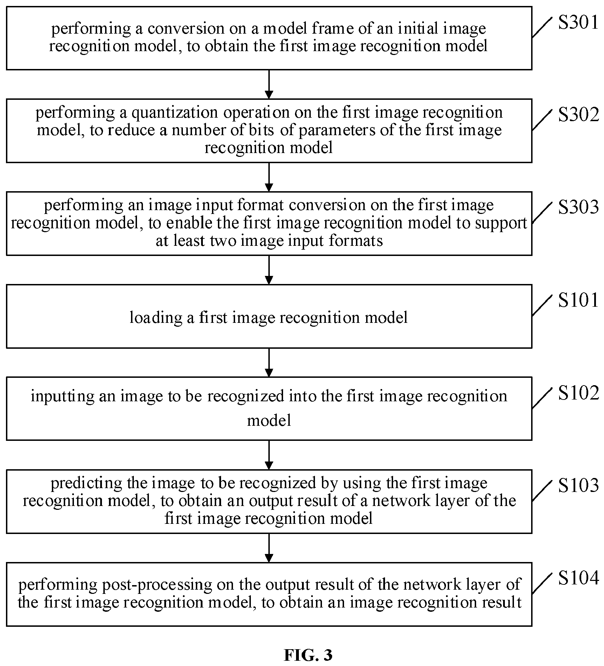

FIG. 3 is a flowchart for implementing another image recognition method according to an embodiment of the present application. As shown in FIG. 3, in some implementations, prior to the above S101, the image recognition method may further include:
S301: performing a conversion on a model frame of an initial image recognition model, to obtain the first image recognition model;
wherein, the model frame of the first image recognition model may be a model frame supported by the NNIE of the first chip.

The above S301 can solve the problem that the NNIE chip does not support the model framework of the image recognition model. Currently, common model frameworks of the depth learning model may include Caffe, TensorFlow, PaddlePaddle, Pytorch and so on, but NNIE only supports the model of Caffe framework. If the model framework of an initial image recognition model is the model framework such as TensorFlow, PaddlePaddle or Pytorch, the model framework of the initial image recognition model can be converted into a model framework supported by the NNIE of the chip, i.e., a Caffe model framework, by using the above S301. Optionally, the above conversion of the model framework may involve at least one of computational graph resolution, operator alignment, and tensor modification among different frameworks.

As shown in FIG. 3, in some implementations, the above method may further include:
S302: performing a quantization operation on the first image recognition model, to reduce a number of bits of parameters of the first image recognition model.

Typically, the parameters of the image recognition model may use floating point numbers. Since the number of bits for the floating points is larger, storage thereof will occupy more spaces and thus more computing resources are consumed. In view of this, the embodiment of the present application can reduce the number of bits of the parameters of the initial image recognition model by using the above-mentioned S202, for example, the number of bits of the parameters is quantized to 8 bits, thereby reducing the number of bits required for each parameter, to realize compression of the neural network, so that memory occupation can be remarkably reduced and inference time can be reduced. Optionally, the embodiments of the present application implement the quantization operation using an NNIE mapper of a chip. A volume of the quantized model is reduced by about 3/4, and the accuracy of the model is only slightly reduced.

As shown in FIG. 3, in some implementations, the above method may further include:
S303: performing an image input format conversion on the first image recognition model, to enable the first image recognition model to support at least two kinds of image input formats.

If an image captured by a far infrared camera is used as an image (static image or video image) input, since the image captured by the far infrared camera is in YUV format, the YUV format needs to be used as the image input format of the first image recognition model. If an image captured by an ordinary camera is used as an image (static image or video image) input, since the image taken by the ordinary camera is in RGB format, the RGB format needs to be used as the image input format of the first image recognition model. For this case, image input format conversion (for example, YUV model conversion) may be performed by using the above-described S303. Optionally, the image input format conversion is implemented by using the NNIE_mapper, the first image recognition model that can be loaded and inferred on the NNIE may be obtained by configuring an input item of the model conversion of the NNIE_mapper, and the image input format can be freely switched according to the scene.

Through the foregoing steps, the first image recognition model (e.g., a wk model) supported by the NNIE of the first chip may be obtained, after which the first image recognition model can be deployed by using the process shown in FIG. 1.

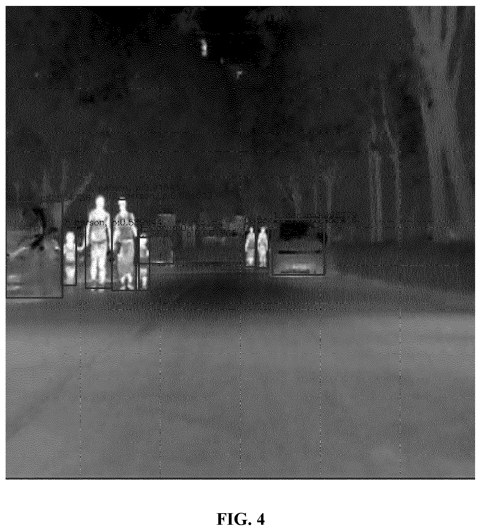

FIG. 4 is a schematic diagram showing the image recognition effect of an embodiment of the present application, and FIG. 4 shows that objects such as vehicles and pedestrians are recognized.

In addition, the format of an image to be recognized input by the embodiment of the present application may include at least one image format, which is the image input format supported by the first image recognition model, for example, YUV format, RGB format, etc.

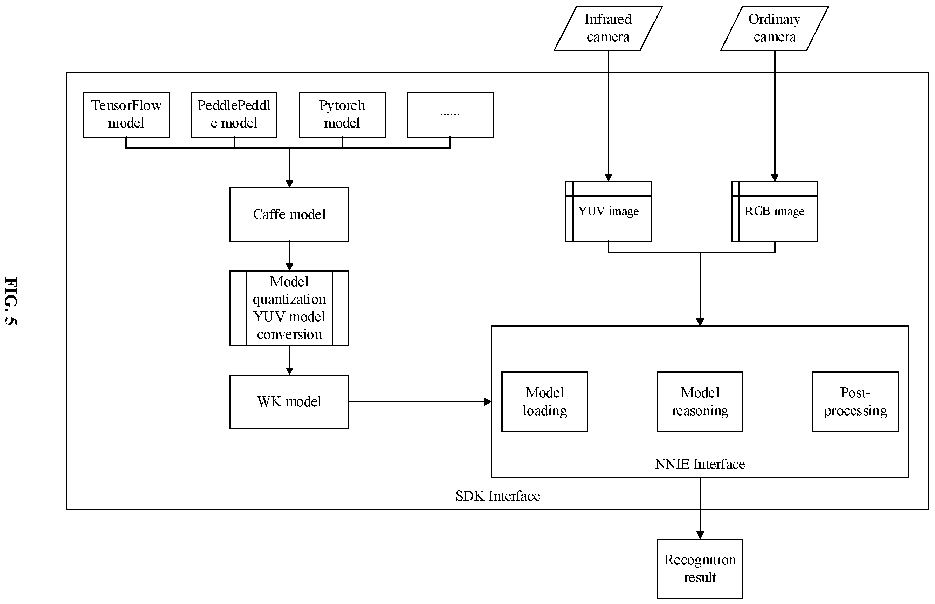

FIG. 5 is a schematic overall flow diagram according to an embodiment of the present application. As shown in FIG. 5, the embodiment of the present application firstly converts an image recognition model of a non-Caffe framework into a Caffe framework by adopting model framework conversion. Then, model quantization and YUV model conversion are performed on the converted image recognition model, to obtain a wk model supported by the chip NNIE. Then, the wk model is deployed by using an NNIE interface of the chip, which may include model loading, image inputting, model reasoning (i.e. using the first image recognition model to predict an image to be recognized) and post-processing processes, and a recognition result of the image recognition model is finally output. Here, the input image can be a YUV image captured by a far infrared camera and/or a RGB image captured by a common camera.

In summary, compared with the prior art, the embodiment of the present application has the advantages of providing a support for most common neural networks in the field of depth learning, providing a support for other network frameworks (such as TensorFlow, PaddlePaddle and the like) in addition to Caffe, providing processing of network layers not supported by some NNIEs, and providing a support for YUV image data and RGB image data. In addition, the embodiment of the application can package the processing method into a software development kit (SDK) and provide an internally encapsulated interface for integration and use. A user does not need to care about how to convert the model and how to call the NNIE interface, and the image recognition result can be obtained only by using a chip developing board and a camera.

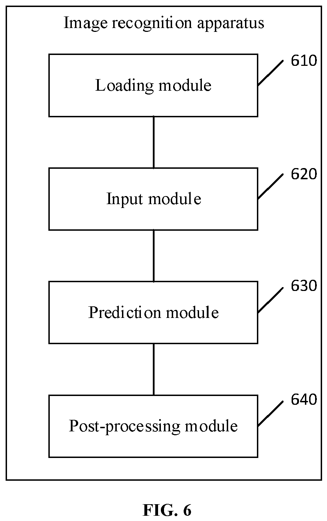

An embodiment of the present application also provides an image recognition apparatus, and FIG. 6 is a schematic diagram of the structure of the image recognition apparatus according to the embodiment of the present application, which may include:
a loading module 610 configured for loading a first image recognition model;
an input module 620 configured for inputting an image to be recognized into the first image recognition model;
a prediction module 630 configured for predicting the image to be recognized by using the first image recognition model, to obtain an output result of a network layer of the first image recognition model; and
a post-processing module 640 configured for performing post-processing on the output result of the network layer of the first image recognition model, to obtain an image recognition result.
In some implementations, a loading module 610 may be configured for loading the first image recognition model on a neural network inference engine NNIE of a first chip.

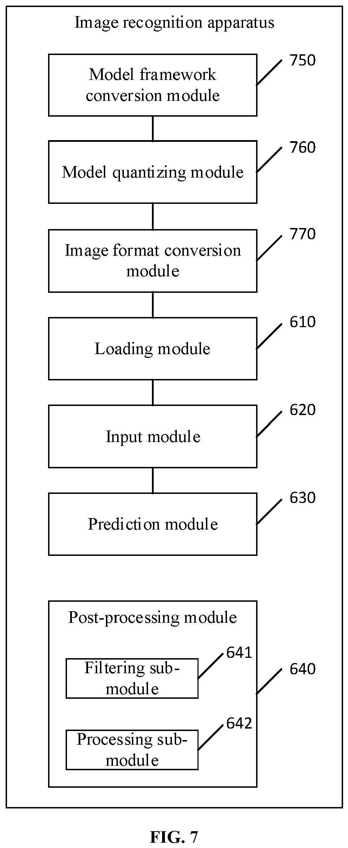

As shown in FIG. 7, in some implementations, the post-processing module 640 may include:
a filtering sub-module 641 configured for performing filtering on boxes output by the network layer of the first image recognition model, to obtain the boxes with a degree of confidence higher than a preset threshold value; and
a processing sub-module 642 configured for performing box decoding and/or non-maximum suppression processing on the boxes with the degree of confidence higher than the preset threshold value, to obtain the image recognition result.

In some implementations, the loading, the inputting, and the predicting may be performed by using an NNIE application program interface (API) of the first chip.

As shown in FIG. 7, in some implementations, the above apparatus may further include:
a model frame conversion module 750 configured for performing a conversion on a model frame of an initial image recognition model, to obtain the first image recognition model;
the model frame of the first image recognition model may be a model frame supported by the NNIE of the first chip.

In some implementations, the model frame supported by the NNIE of the first chip may include a convolutional architecture for fast feature embedding (Caffe) framework.

As shown in FIG. 7, in some implementations, the above apparatus may further include:
a model quantizing module 760 configured for performing a quantization operation on the first image recognition model, to reduce a number of bits of parameters of the first image recognition model.

As shown in FIG. 7, in some implementations, the above apparatus may further include:
an image format conversion module 770 configured for performing an image input format conversion on the first image recognition model, to enable the first image recognition model to support at least two image input formats.

The function of each module in each apparatus of an embodiment of the present application can refer to the corresponding description in the above-mentioned method, and will not be described in detail herein.

In accordance with the embodiment of the present application, the present application also provides an electronic device and a readable storage medium.

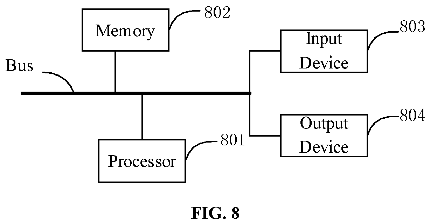

FIG. 8 is a block diagram of an electronic device for an image recognition method according to an embodiment of the present application. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the application described and/or claimed herein.

As shown in FIG. 8, the electronic device may include one or more processors 801, a memory 802, and interfaces for connecting the respective components, including high-speed interfaces and low-speed interfaces. The respective components are interconnected by different buses and may be mounted on a common main-board or otherwise as desired. The processor may process instructions executed within the electronic device, including instructions stored in or on the memory to display graphical information of a graphical user interface (GUI) on an external input/output device, such as a display device coupled to the interface. In other implementations, a plurality of processors and/or buses may be used with a plurality of memories, if necessary. Also, a plurality of electronic devices may be connected, each providing some of the necessary operations (e.g., as an array of servers, a set of blade servers, or a multiprocessor system). An example of a processor 801 is shown in Fig. 8.

The memory 802 is a non-transitory computer-readable storage medium provided herein. The memory stores instructions executable by at least one processor to cause the at least one processor to perform the image recognition method provided herein. The non-transitory computer-readable storage medium of the present application stores computer instructions for causing a computer to perform the image recognition method provided herein.

The memory 802, as a non-transitory computer-readable storage medium, may be configured to store non-transitory software programs, non-transitory computer executable programs and modules, such as program instructions/modules corresponding to the image recognition method in the embodiments of the present application (for example, the loading module 610, the input module 620, the prediction module 630, and the post-processing module 640 shown in FIG. 6). The processor 801 executes various functional applications and data processing of the electronic device by running the non-transitory software programs, instructions and modules stored in the memory 802, that is, implements the image recognition method in the above method embodiments.

The memory 802 may include a program storage area and a data storage area, wherein the program storage area may store an operating system, and an application program required for at least one function; and the data storage area may store data created according to the use of the electronic device for image recognition, etc. In addition, the memory 802 may include a high speed random access memory, and may also include a non-transitory memory, such as at least one disk storage device, a flash memory device, or other non-transitory solid state storage devices. In some embodiments, the memory 802 may optionally include a memory remotely located with respect to the processor 801, which may be connected, via a network, to the electronic device for image recognition. Examples of such networks may include, but are not limited to, the Internet, an intranet, a local area network, a mobile communication network and combinations thereof.

The electronic device for the image recognition method may further include an input device 803 and an output device 804. The processor 801, the memory 802, the input device 803, and the output device 804 may be connected by a bus or other means, exemplified by a bus connection in Fig. 8.

The input device 803 may receive input numeric or character information, and generate a key signal input related to a user setting and a functional control of an electronic device for image recognition. For example, the input device may be a touch screen, a keypad, a mouse, a track pad, a touch pad, a pointer stick, one or more mouse buttons, a track ball, a joystick, and other input devices. The output device 804 may include a display device, an auxiliary lighting device (e.g., a light emitting diode (LED)), a tactile feedback device (e.g., a vibrating motor), etc. The display device may include, but is not limited to, a liquid crystal display (LCD), an LED display, and a plasma display. In some embodiments, the display device may be a touch screen.

Various implementations of the systems and techniques described herein may be implemented in a digital electronic circuit system, an integrated circuit system, an application specific integrated circuit (ASIC), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

These computing programs (also referred to as programs, software, software applications, or codes) may include machine instructions of a programmable processor, and may be implemented using high-level procedural and/or object-oriented programming languages, and/or assembly/machine languages. As used herein, the terms "machine-readable medium" and "computer-readable medium" may refer to any computer program product, apparatus, and/or device (e.g., a magnetic disk, an optical disk, a memory, a programmable logic device (PLD)) for providing machine instructions and/or data to a programmable processor, including a machine-readable medium that receives machine instructions as machine-readable signals. The term "machine-readable signal" may refer to any signal used to provide machine instructions and/or data to a programmable processor.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other.

It should be understood that the steps can be reordered, added or deleted using the various flows illustrated above. For example, the steps described in the present application may be performed concurrently, sequentially or in a different order, so long as the desired results of the technical solutions disclosed in the present application can be achieved, and there is no limitation herein.

The above-described specific embodiments do not limit the scope of the present application. It will be apparent to those skilled in the art that various modifications, combinations, sub-combinations and substitutions are possible, depending on design requirements and other factors. Any modifications, equivalent substitutions, and improvements within the spirit and principles of this application are intended to be included within the scope of this application.

## Claims

1. An image recognition method, comprising:
loading (S101) a first image recognition model;
inputting (S102) an image to be recognized into the first image recognition model;
predicting (S103) the image to be recognized by using the first image recognition model, to obtain an output result of a network layer of the first image recognition model; and
performing (S104) post-processing on the output result of the network layer of the first image recognition model, to obtain an image recognition result.

2. The image recognition method according to claim 1, wherein, the loading the first image recognition model, comprises: loading the first image recognition model on a neural network inference engine NNIE of a first chip.

3. The image recognition method according to claim 1 or 2, wherein, the performing the post-processing on the output result of the network layer of the first image recognition model, to obtain an image recognition result, comprises:
performing (S201) filtering on boxes output by the network layer of the first image recognition model, to obtain the boxes with a degree of confidence higher than a preset threshold value; and
performing (S202) box decoding and/or non-maximum suppression processing on the boxes with the degree of confidence higher than the preset threshold value, to obtain the image recognition result.

4. The image recognition method according to any one of claims 1 to 3, wherein, the loading, the inputting, and the predicting are performed by using an NNIE application program interface API of the first chip.

5. The image recognition method according to any one of claims 1 to 4, wherein, prior to the loading the first image recognition model, the method further comprises:
performing (S301) a conversion on a model frame of an initial image recognition model, to obtain the first image recognition model;
the model frame of the first image recognition model is a model frame supported by the NNIE of the first chip.

6. The image recognition method according to any one of claims 1 to 5, wherein, the model frame supported by the NNIE of the first chip comprises a Caffe framework, wherein, Caffe is convolutional architecture for fast feature embedding.

7. The image recognition method according to any one of claims 1 to 6, further comprising:
performing (S302) a quantization operation on the first image recognition model, to reduce a number of bits of parameters of the first image recognition model; and/or
performing (S303) an image input format conversion on the first image recognition model, to enable the first image recognition model to support at least two image input formats.

8. An image recognition apparatus, comprising:
a loading module (610) configured for loading a first image recognition model;
an input module (620) configured for inputting an image to be recognized into the first image recognition model;
a prediction module (630) configured for predicting the image to be recognized by using the first image recognition model, to obtain an output result of a network layer of the first image recognition model; and
a post-processing module (640) configured for performing post-processing on the output result of the network layer of the first image recognition model, to obtain an image recognition result.

9. The image recognition apparatus according to claim 8, wherein, the loading module is configured for loading the first image recognition model on a neural network inference engine NNIE of a first chip.

10. The image recognition apparatus according to claim 8 or 9, wherein, the post-processing module comprises:
a filtering sub-module (641) configured for performing filtering on boxes output by the network layer of the first image recognition model, to obtain the boxes with a degree of confidence higher than a preset threshold value; and
a processing sub-module (642) configured for performing box decoding and/or non-maximum suppression processing on the boxes with the degree of confidence higher than the preset threshold value, to obtain the image recognition result.

11. The image recognition apparatus according to any one of claims 8 to 10, wherein, the loading, the inputting, and the predicting are performed by using an NNIE application program interface API of the first chip.

12. The image recognition apparatus according to any one of claims 8 to 11, further comprising:
a model frame conversion module (750) configured for performing a conversion on a model frame of an initial image recognition model, to obtain the first image recognition model,
the model frame of the first image recognition model is a model frame supported by the NNIE of the first chip; and
a model quantizing module (760) configured for performing a quantization operation on the first image recognition model, to reduce a number of bits of parameters of the first image recognition model; and/or
an image format conversion module (770) configured for performing an image input format conversion on the first image recognition model, to enable the first image recognition model to support at least two image input formats.

13. The image recognition apparatus according to any one of claims 8 to 12, wherein, the model frame supported by the NNIE of the first chip comprises a Caffe framework, wherein, Caffe is convolutional architecture for fast feature embedding.

14. An electronic device, comprising:
at least one processor (801); and
a memory (802) communicatively connected to the at least one processor; wherein,
the memory stores instructions executable by the at least one processor, the instructions being executed by the at least one processor to enable the at least one processor to perform the image recognition method of any one of claims 1 to 7.

15. A non-transitory computer-readable storage medium storing computer instructions, the computer instructions causing a computer to perform the image recognition method of any one of claims 1 to 7.
